# EUROPEAN PATENT SPECIFICATION

(11) **EP 0 613 767 B1**
(45) Date of publication and mention of the grant of the patent: **10.06.1998**
(21) Application number: 94301569.3
(22) Date of filing: 04.03.1994
(51) Int. Cl.: B29D 30/36, B29D 30/72

(54) **Method of forming a green tyre**
Verfahren zum Aufbauen von Rohreifen
Procédé de confection de pneus crus

(30) Priority: 04.03.1993 JP 67327/93; 19.03.1993 JP 83883/93
(43) Date of publication of application: 07.09.1994
(73) Proprietor: BRIDGESTONE CORPORATION, Tokyo 104-0031 (JP)
(72) Inventor: Tokunaga, Toshio, Fuchu-shi, Tokyo (JP); Soga, Naomichi, Kokubunji-shi, Tokyo (JP); Kawashima, Haruo, Kodaira-shi, Tokyo (JP)
(74) Representative: Silverman, Warren

(56) References cited:
- EP-A- 0 340 146
- EP-A- 0 432 993
- FR-A- 2 121 066
- US-A- 3 776 793
- US-A- 3 784 426

## Description

The present invention relates to a method of forming a green tyre, in particular, but not exclusively, a pneumatic tyre for an automobile.

In general, pneumatic tyres for automobiles are manufactured as follows: firstly, the inner surface of a tyre is formed from a toroidal carcass ply on which an inner liner is lined. The crown portion of the carcass ply is covered with a BT band comprising a belt and a tread rubber. Portions extending from the side surfaces of the carcass ply to the outer peripheral BT band are covered with side rubbers. The green tyre with such a construction is first formed of green rubber, and is then vulcanized.

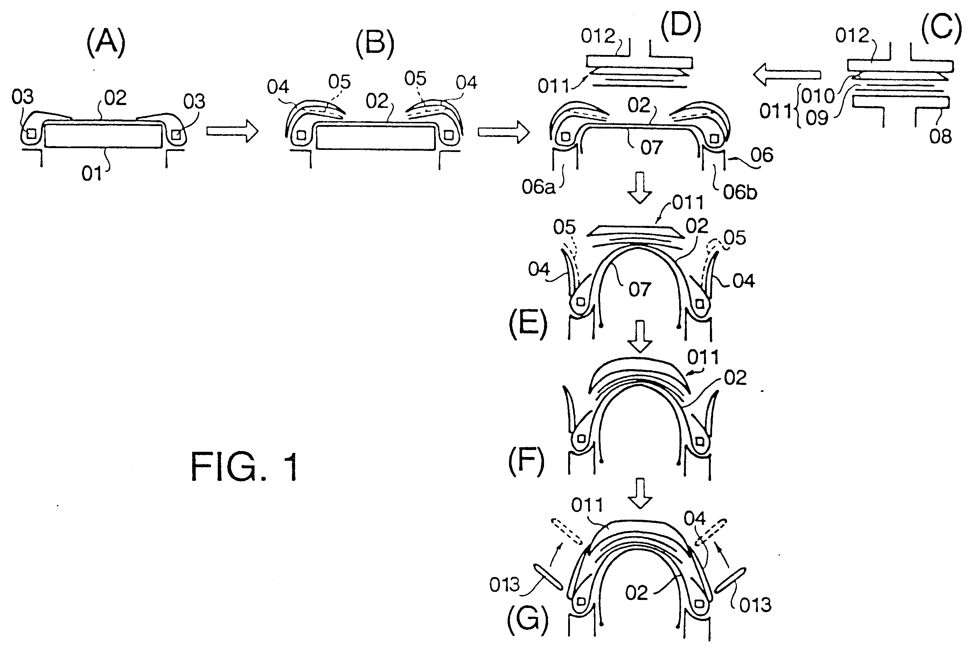

Figure 1 of the accompanying drawings illustrates the steps in one example of a conventional method of forming the green tyre. In this method, as shown in (A) of Figure 1, a carcass ply 02 is first wound around a first forming drum 01 into a cylindrical shape, and bead wires 03 are mounted at both side portions of the carcass ply 02. Subsequently, the carcass ply 02 is folded in such a manner as to be wrapped around these bead wires 03. Next, as shown in (B), side rubbers 04 are wrapped and stuck around both the folded ends of the carcass ply 02. A sheet 05, made from polyethylene or the like (hereinafter referred to as the "polysheet"), is interposed between each of the side rubbers 04 and the carcass ply 02 so that the inner peripheral surface portion of the side rubber 04 is not adhesively bonded to the carcass ply 02.

The carcass body thus formed is then removed from the first forming drum 01, and is transferred onto a second forming drum 06 (see (D)). The second forming drum 06 is so constructed that a pair of drum bodies 06a and 06b having end surfaces opposed to each other are connected to each other by means of a bladder 07.

As shown in (C), a BT band 011, comprising a belt 09 and a tread 010, is formed separately on a BT drum 08. The BT band 011 is then transferred by means of a transfer ring 012, and is positioned over the outer peripheral portion of the second forming drum 06 on which the carcass body is mounted (see (D)).

As shown in (E), pressurized fluid is supplied to the bladder 07 and both the drum bodies 06a and 06b are then moved towards each other. This causes the bladder 07 to be expanded and deformed into a toroidal shape and the side rubbers 04 to be raised outwards so that the polysheets 05 can be removed. Accompanied with the expansion of the bladder 07, the carcass ply 02 is deformed in a toroidal shape, and is press-contacted with the BT band 011 positioned on the outer peripheral side of the carcass ply 02.

Next, as shown in (F), the BT band 011 is bent along the carcass ply 02 by a stitcher (not shown), and is adhesively bonded therewith. Subsequently, as shown in (G), folding stitchers 013 are moved in the directions shown by the arrows, so that the side rubbers 04 are press-bonded on the side surfaces of the carcass ply 02 and the side edge portions of the BT band 011.

In the conventional method of forming a green tyre described above, when the side rubbers 04 are wound around the first forming drum 01, the polysheets 05 must be wound together with the side rubbers 04. Furthermore, the polysheets 05 must be removed prior to the process of expanding/deforming the carcass ply 02. This leads to a relatively large number of steps in the manufacturing process and lengthens the time required for the formation of a green tyre.

Moreover, since the polysheet 05 is reused, the recovery thereof requires a lot of labour, and a reproducing apparatus must be installed.

Additionally, when the polysheet 05 is removed, the side rubber 04 is raised, as a result of which the side rubber 04 can be deformed. This often causes a failure in the shape of the side rubber after being press-bonded on the side surface of the tyre.

Embodiments of the present invention aim to overcome the disadvantages of the known method of forming a green tyre.

EP-A-0340146 discloses a method in which a green tyre carcass is formed in a primary forming step and is then carried to a secondary forming step in which the side walls are applied to the green tyre carcass. The tyre carcass is transferred from one step to the other by a transfer ring which holds the outer periphery of the carcass.

According to a first aspect of the present invention, there is provided a method of forming a green tyre, comprising:
on a first forming drum, forming a carcass body having bead portions by mounting a bead wire at either side of a cylindrical carcass ply;
deforming the carcass body into a toroidal shape;
bonding a BT band to the outer peripheral surface of the carcass body;
carrying the carcass body having the BT band bonded thereto to a second forming drum and mounting the carcass body on the second forming drum, the second forming drum having side rubbers positioned thereon adjacent each side of the carcass body;
bringing a side rubber into contact with each side of the carcass body; and
bonding the side rubbers to the sides of the carcass body,
   wherein the carcass body having the BT band bonded thereto is carried to the second forming drum whilst being maintained in its toroidal shape by a holding/carrying apparatus which comprises (i) a outer periphery holding body adapted to hold the outer peripheral surface of said carcass body, and (ii) a pair of bead portion holding bodies positioned on either side of the outer periphery holding body and adapted to hold the bead portions of the carcass body.

The side rubbers may be pressed against either side of the carcass body having the BT band bonded thereto by means of inflatable bladders of the second forming drum so that they can be bonded to the sides of the carcass body.

According to a second aspect of the present invention, there is provided in, or for use in, an apparatus for carrying out the method of the first aspect of the invention, which apparatus comprises a said first forming drum and a said second forming drum,
a holding/carrying apparatus for transferring the carcass body with the BT band bonded thereto from the first forming drum to the second forming drum while maintaining the carcass body in a toroidal shape, the holding/carrying apparatus comprising:
an outer periphery holding body for holding the outer peripheral surface of the carcass body; and
a pair of bead portion holding bodies for holding the bead portions of the carcass, the bead portion holding bodies being positioned either side of the outer periphery holding body and being movable towards or away from each other symmetrically with respect to the outer periphery holding body.

The outer periphery holding body and the bead portion holding bodies preferably each comprise (a) a plurality of holding segments, which holding segments are circumferentially disposed at substantially equal intervals and are movable in the radial direction, and (b) a mechanism for radially moving said holding segments.

Conventionally, when carrying a green tyre semi-product formed in a toroidal shape, a holding/carrying apparatus which holds only the outer peripheral surface of the semi-product has generally been used.

However, the carcass body with the BT band produced by the method of the present invention does not have the side rubbers bonded to the sides thereof. Accordingly, when such a carcass body with the BT band is carried to the second forming drum by the above-described conventional holding/carrying apparatus, which holds only the outer peripheral surface, it is difficult to mount precisely the carcass body on the second forming drum. This is because the bead portions of the carcass body are not rigid. A fault in the positioning operation can cause the tyre quality to deteriorate.

According to the present invention, the carcass body with the BT band is carried such that not only the outer peripheral surface but also the bead portions on both sides are held. Therefore, the carcass body can be carried to and mounted on the second forming drum without any deformation of the bead portions, that is, it can be exactly positioned and mounted on the second forming drum.

As mentioned above, in the method of the present invention, when the carcass body is first formed, the side rubbers are not stuck onto the carcass body. Rather, the side rubbers are stuck to the carcass body having the BT band bonded thereto after it has been deformed into a toroidal shape. Preferably, the side rubbers are wound around a second forming drum and are press-bonded on both sides of the carcass body by use of, for example, bladders.

Accordingly, the need to interpose a polysheet between the carcass body and each side rubber and to remove the side rubber again later in the process is eliminated. Furthermore, work in recovering and reusing the polysheet is eliminated. This makes it possible to simplify, and decrease the time required for, the forming process. Additionally, the forming process is easily automated and the quality of a tyre produced by the process can be improved.

For a better understanding of the invention, and to show how the same may be carried into effect, reference will now be made, by way of example only, to the accompanying drawings, in which:-
Fig. 1 is a view showing processes of a conventional green tyre forming method; Figs. 2a to 2h are schematic views showing
sequential steps of a method in accordance with the present invention;
Fig. 3 is a vertical schematic view showing parts of a forming drum;
Fig. 4 is a partial vertical sectional view of a second forming drum before a carcass body is mounted thereon;
Fig. 5 is a partial vertical sectional view of the second forming drum of Fig. 4 after the carcass body is mounted thereon;
Fig. 6 is a partial vertical sectional view showing the second forming drum of Fig. 4 when side bladders are expanded;
Figs. 7a to 7c are schematic views for explaining the function of a holding/carrying apparatus in accordance with the second aspect of the present invention;
Fig. 8 is a front view showing the holding/carrying apparatus;
Fig. 9 is a sectional view taken along the line IX-IX of Fig. 8;
Fig. 10 is a partial front view of an outer periphery holding body;
Fig. 11 is a sectional view taken along the line XI-XI of Fig. 10;
Fig. 12 is a sectional view taken along the line XII-XII of Fig. 10;
Fig. 13 is a partial front view taken of a bead portion holding body;
Fig. 14 is a sectional view taken along the line XIV-XIV of Fig. 13;
Fig. 15 is a sectional view taken along the line XV-XV of Fig. 13; and

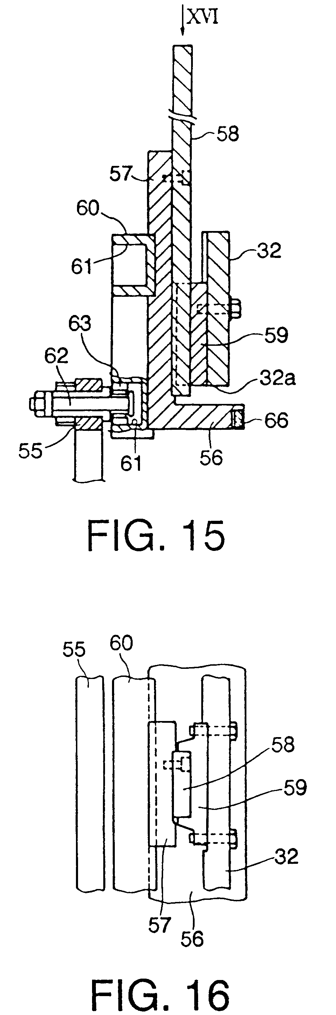

Fig. 15 is a view showing the outer surface of the bead portion holding body taken in the direction of the arrow X of Fig. 15.

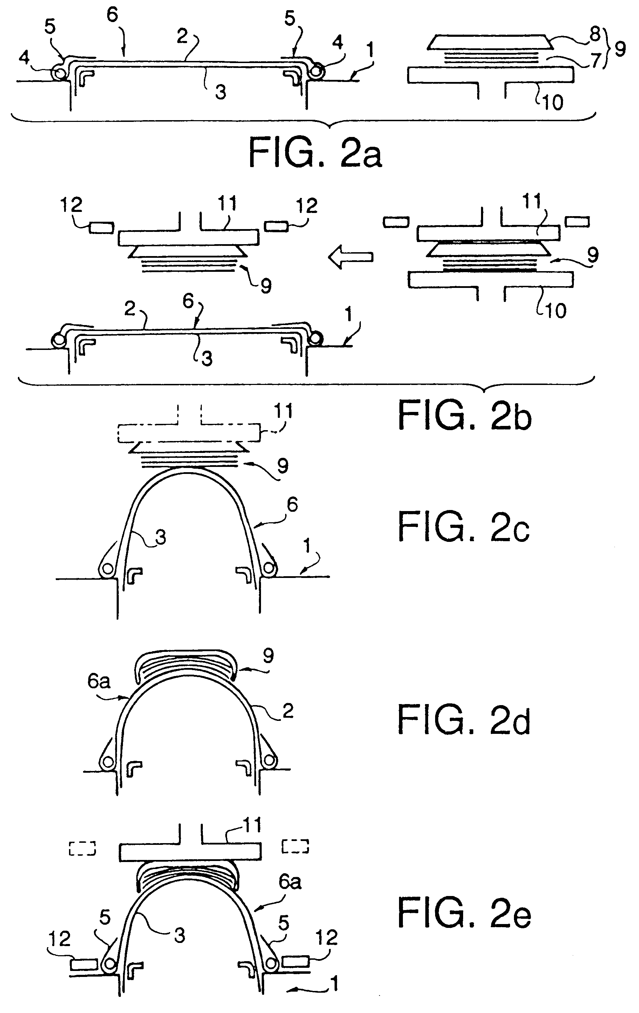

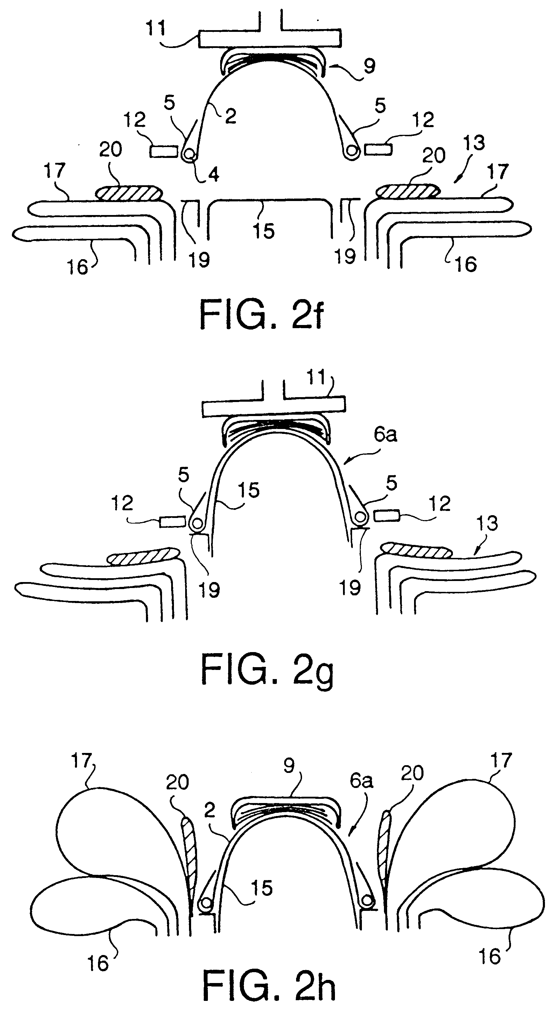

Figs. 2 to 6 illustrate the steps in one embodiment of a method of forming a green tyre according to the present invention. Hereinafter, the present invention will be described with reference to these figures.

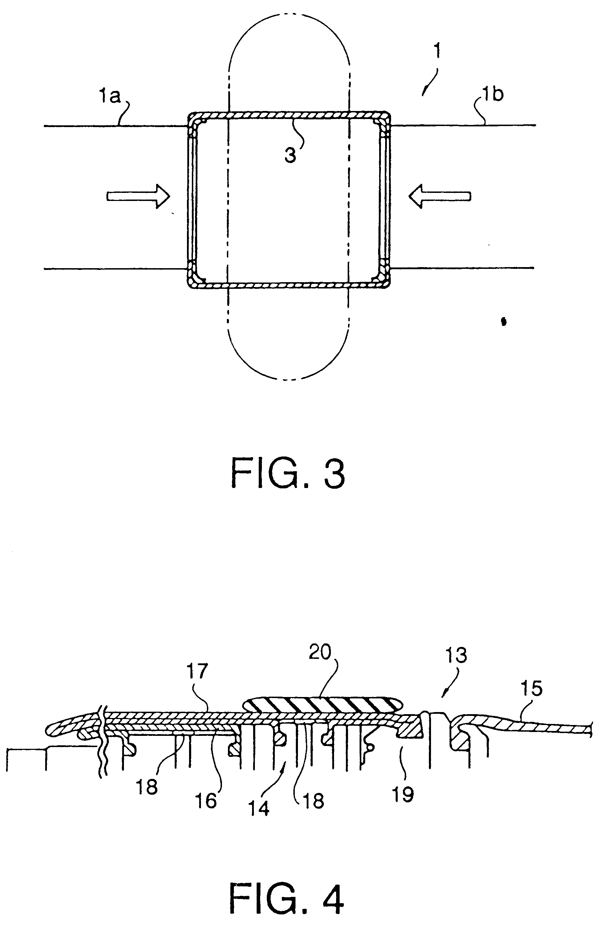

Figs. 2a to 2h show steps in the method of the present invention in sequence. First, a carcass ply 2 is wound around a first forming drum 1 in a cylindrical shape. As shown in Fig. 3, the first forming drum 1 is so constructed that drum bodies 1a and 1b, which are spaced to the right and left, respectively, with their end surfaces opposed to each other, are connected to each other by a cylindrical bladder 3. A pressurized fluid can be introduced to the bladder 3 to expand the bladder 3, and the right and left drum bodies 1a and 1b can be moved towards each other so that the bladder 3 is deformed into a toroidal shape.

As shown on the left side of Fig. 2a, the carcass ply 2 is wound around the first forming drum 1, and bead wires 4 are set around both of the side portions of the carcass ply 2. Both the outer edges of the carcass ply 2 are folded over the bead wires 4, thereby to form a carcass body 6 having bead portions 5 at both the sides.

Separately from this process, as shown on the right side of Figure 2a, a BT band 9 comprising a belt 7 and a tread 8 is formed on a BT drum 10.

After the carcass body 6 is formed on the first forming drum as described above, the BT band 9 on the BT drum 10 is carried by a transfer ring 11, and is positioned over the outer peripheral portion of the first forming drum 1, that is, at the position where the BT band 9 coaxially surrounds the first forming drum 1 (see Fig. 2b). In such a state, the bladder 3 is expanded/deformed to a toroidal shape as described above. Accompanied by the expansion of the bladder 3, the carcass ply 2 is also expanded/deformed in a toroidal shape, and is caused to contact the inner surface of the BT band 9 thereby to support the BT band 9 (see Fig. 2c). After this step, the transfer ring 11 is removed.

The BT band 9 is pressed on the peripheral surface of the carcass ply 2 by a stitcher (not shown), to bond adhesively the BT band and the carcass ply 2 with each other and thereby form a carcass body with a BT band (hereinafter referred to as "carcass body 6a") (see Fig. 2d).

The transfer ring 11 is then mounted on the outer periphery of the carcass body 6a again (see Fig. 2e). Bead ring portion holding rings 12, which are capable of being freely reduced in diameter, are provided on both the sides of the transfer ring 11. These bead portion holding rings 12 are reduced in diameter and are moved to be alongside the outer sides of the bead portions 5 of the carcass body 6a. Thus, the carcass body 6a is in the state that the whole periphery of the carcass body 6a is fixed by the transfer ring 11 and the bead portions 5 are fixed from both the sides by means of the bead portion holding rings 12. In this state, the bladder 3 is contracted, and the carcass body 6a is removed from the first forming drum 1.

The carcass body 6a is then carried by the transfer ring 11 and is mounted on a second forming drum 13, as shown in Fig. 2f. As with the first forming drum 1, the second forming drum 13 is constructed such that right and left drum bodies are connected to each other by means of a cylindrical bladder 15. Fig. 4 is a vertical sectional view showing a radially outer portion of the left half portion of the second forming drum 13, wherein numeral 14 indicates a drum body and numeral 15 indicates the bladder which connects the right and left drum bodies. Inner and outer side bladders 16 and 17 are flat when deflated, as shown in Figure 4, and the side bladder 17 forms the outer peripheral surface of the drum 13.

The edge of bladder 15 is secured to the inner peripheral edge of the drum body 14, and a bead lock ring 19 is provided so as to be adjacent to the edge of the bladder 15. The bead lock ring 19 is comprises a plurality of parts divided in the peripheral direction which can be projected outwards in the radial direction so as to enlarge the diameter of the bead lock ring. The inner edge of the side bladder 17 is secured to the bead lock ring 19. Fig. 2f is a schematic view of the main components of the second forming drum 13, wherein corresponding parts are indicated by the same reference numerals.

Prior to the transfer of the carcass body 6a from the first forming drum 1 to the second forming drum 13, side rubbers 20 are wound around and mounted on the right and left side bladders 17 of the second forming drum 13 at specified positions (see Fig. 2f, Fig. 4).

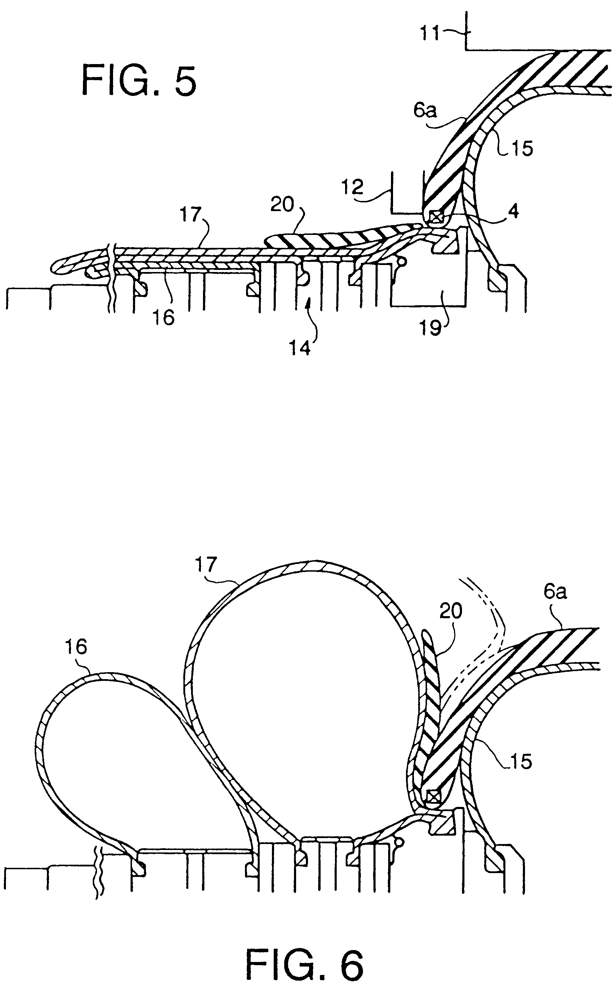

After the carcass body 6a is positioned on the outer periphery of the second forming drum 13, the bladder 15 is expanded to support the carcass body 6a from the inner side. The bead lock rings 19 are extended in diameter to support the bead portions 5 from the inner side in the radial direction (see Fig. 2g, Fig. 5). Thereafter, the transfer ring 11 and the bead portion holding rings 12 are removed from the carcass body 6a.

Subsequently, as shown in Fig. 2h and Fig. 6, side bladders 16 and 17 are expanded by the introduction of pressurized fluid. Each side rubber 20 is pushed outwardly by the expanded side bladder 17. However, because the side bladder 17 is pushed by the expanded side bladder 16 so as to cover the side surface of the carcass body 6a, the side rubber 20 is folded onto the side surface of the carcass body 6a, as shown in the chain line of Fig. 6. The side rubber 20 is thus press-contacted with the side surface of the carcass body 6a and is adhesively bonded therewith, thereby to form a green tyre having the carcass ply 2, the BT band 9 and the side rubbers 20.

In this forming method, the side rubbers 20 are not formed on the carcass body 6a before the carcass body 6a is formed in the toroidal shape, that is, the side rubbers 20 are wound around the second forming drum 13 and are press-bonded on the carcass body 6a after the carcass body 6a is formed. This eliminates the necessity of providing a polysheet for preventing adhesive bonding between the side rubbers and the carcass ply in the early stages of the process, as in the conventional method.

Accordingly, the insertion of the polysheet, the work needed to remove the polysheet, and the work needed to recover the removed polysheet are not required. Thus the forming work is simplified and the time required for the forming work is reduced. Moreover, since the manual work associated with the polysheet is eliminated, the forming work is easily automated, and the quality of the tyre product is improved.

Next, a holding/carrying apparatus used for carrying the carcass body 6a from the first forming drum 1 to the second forming drum 13 will be described.

The holding/carrying apparatus comprises an outer periphery holding body for holding the outer peripheral surface of the carcass body 6a (equivalent to the above described transfer ring 11); bead portion holding bodies positioned on both sides of the outer periphery holding body for holding the bead portions of the carcass body 6a (equivalent to the above described bead portion holding rings 12); and a bead portion holding body drive mechanism for moving the bead portion holding bodies towards or away from each other symmetrically with respect to the outer periphery holding body. Each of the above outer periphery holding bodies and the bead portion holding bodies comprises a plurality of holding segments which are arranged at substantially equal intervals in the circumferential direction and are movable in the radial direction; and a holding segment extending/contracting mechanism for moving these holding segments radially.

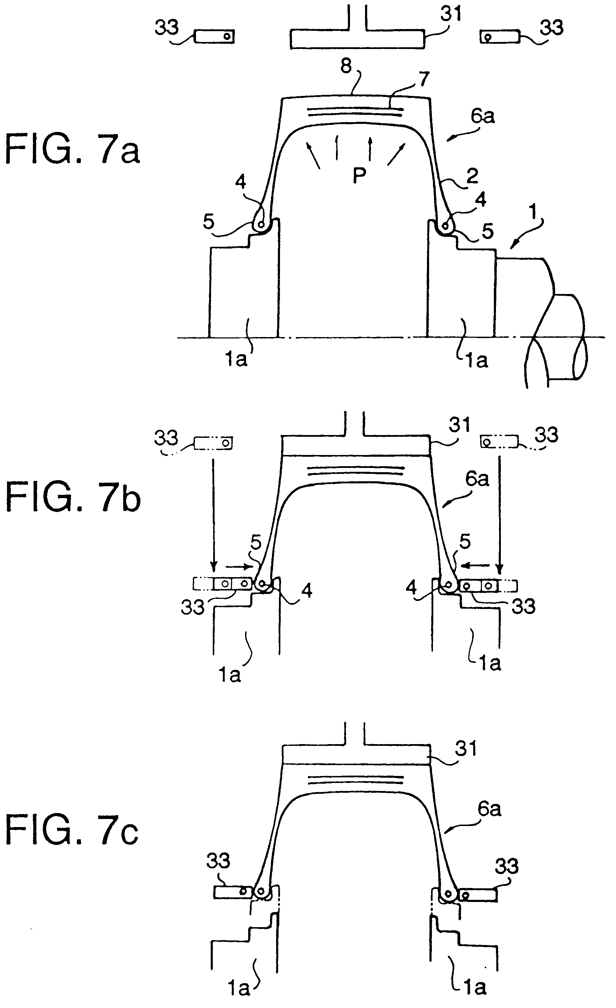

First, the function of the holding/carrying apparatus will be described with reference to Figs. 7a to 7c. These figures are equivalent to the above-described Figs. 2d to 2e. The first forming drum 1 includes bead lock rings la capable of being extended and contracted. A carcass body 6a comprises a tread 8 integrally bonded on the outer peripheral portion of a carcass ply 2 via a belt 7. Bead portions 5, each having a bead wire 4 set therein, are formed on both the sides of the carcass ply 2. The carcass body 6a is formed such that it is extended in a toroidal shape by application of a pressure P from the inside while the bead portions are supported by the bead lock rings 1a, which are extended in diameter.

Numeral 31 indicates holding segments provided on the outer periphery holding body of the carrying apparatus, and 33 indicates holding segments of the bead portion holding bodies.

When the carcass body 6a is removed from the first forming drum 1 and is carried to the second forming drum, the whole of the holding/carrying apparatus is first moved along the axial line of the forming drum 1 up to a position in which the holding segments 31 and 33 surround the outer peripheral portion of the carcass body 6a, as shown in Fig. 7a.

Subsequently, as shown in Fig. 7b, the holding segments 31 are moved radially inwardly by the extending/contracting mechanism to hold the outer peripheral surface of the carcass body 6a, and the holding segments 33 are moved radially inwardly by the extending/contracting mechanism to a position facing to the bead portions 5. After this, the bead portion holding bodies on both sides are moved towards each other by the bead portion holding body drive mechanism, so that the bead portions 5 are held from both the sides by the holding segments 33. Magnets for attracting the bead wires 4 are preferably arranged on the surface of the holding segments 33 which abuts the bead portions 5.

After the outer peripheral surface of the carcass body 6a is held by the holding segments 31 and the bead portions 5 on both sides of the carcass body 6a are respectively held by the holding segments 33, the bead lock rings la are contracted to separate the carcass body 6a from the forming drum 1 (see Fig. 7c). Subsequently, the whole of the holding/carrying apparatus is moved in the axial direction of the forming drum 1, to carry the carcass body 6a to the second forming drum.

Since the carcass body 6a is carried in a condition in which not only the outer peripheral surface but also the bead portions on both sides are held, it can be carried to and mounted on the second forming drum without any deformation, that is, it can be exactly positioned and mounted on the second forming drum.

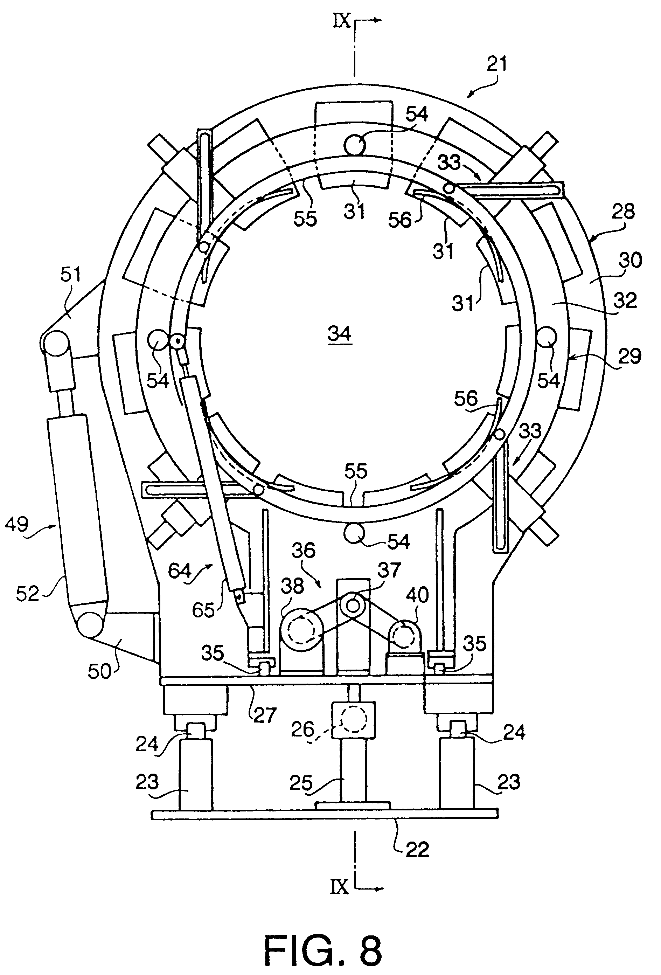

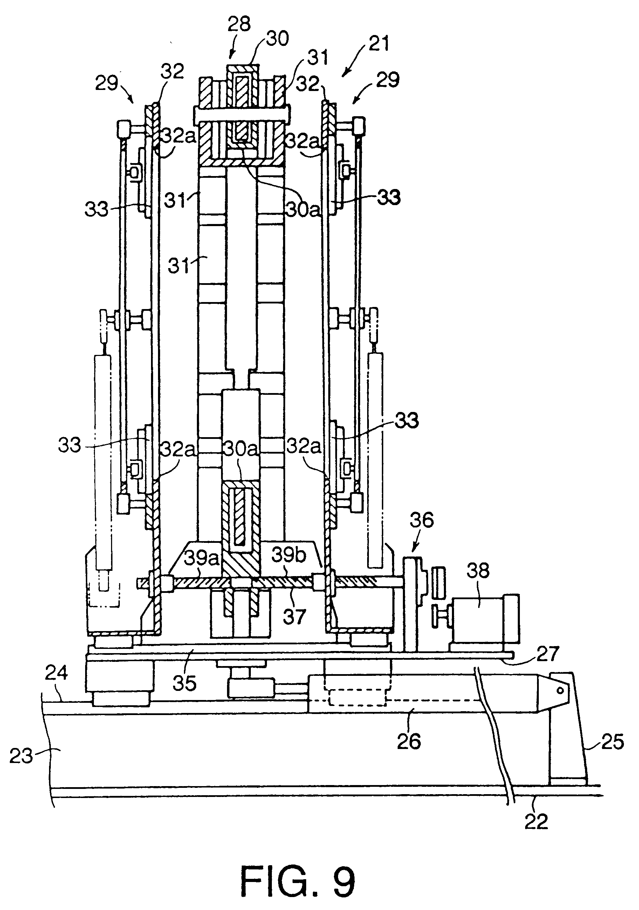

Figs. 8 and 9 are views showing the construction of a holding/carrying apparatus 21 in accordance with the present invention. Fig. 8 is a front view and Fig. 9 is a vertical side view.

The holding/carrying apparatus 21 is supported on beds 23 provided on a base plate 22 so as to be able to travel freely in the direction perpendicular to the plane of the page, i.e. in the lateral direction in Fig. 9, while being guided by rails 24 provided on the beds 23. The apparatus 21 is driven by a cylinder apparatus 26 disposed between a mounting member 25 erected on the base plate 22 and a bottom plate 27 of the apparatus 21.

As shown in Fig. 9, in the holding/carrying apparatus 21, bead portion holding bodies 29 (for holding the bead portions 5 of the carcass body 6a) are located on the right and left sides of an outer periphery holding body 28 (for holding the outer peripheral surface of the carcass body 6a).

The outer periphery holding body 28 is constructed so that the outer periphery holding segments 31 are mounted on an annular supporting frame 30 having a circular opening 30a. A plurality of outer periphery holding segments 31 (11 in this embodiment) are disposed at equal intervals around the opening 30a. In each of the right and left bead portion holding bodies 29, the bead portion holding segments 33 are similarly mounted on an annular supporting frame 32 having a circular opening 32a. A plurality of bead portion holding segments 33 (4 in this embodiment) are disposed at equal intervals around the opening 32a.

The opening 30a and the openings 32a are matched to each other in the lateral direction and define a cylindrical opening 34 through the holding/carrying apparatus 21 in the lateral direction. This opening is positioned along the same axial line as that of the above forming drum 1. Whilst the carcass body 6a is held on the drum 1, the whole of the holding/carrying apparatus 21 is transported by the cylinder apparatus 26 along the rails 24 parallel to the axial line of the opening 34, up to the forming drum 1 so that the carcass body 6a and the forming drum 1 are contained within the opening 34.

The supporting frame 30 of the outer periphery holding body 28 is fixed on the bottom plate 27, whereas the supporting frame 32 of each of bead portion holding bodies 29 is supported on, and movable along, rails 35 which are provided on the bottom plate 27. The respective supporting frames 32 are driven by a bead portion holding body drive mechanism 36 along the rails 35 towards or away from each other, and are positioned symmetrically with respect to the supporting frame 30 of the outer periphery holding body 28. The bead portion holding body drive mechanism 36 comprises of a screw shaft 37, which is threadedly engaged with the right and left supporting frames 32, and a motor 38 for turning the screw shaft 37. The screw shaft 37 has screws 39a and 39b which are threaded in opposed directions on the right and left sides, respectively (Fig. 9). The left supporting frame 32 engages the left screw 39a, while the right supporting frame 32 engages the right screw 39b, so that the respective right and left supporting frames 32 are moved by rotation of the screw shaft 37 by equal distances in opposite directions, that is, towards or away from each other.

The rotation of the screw shaft 37 is transmitted to an encoder 40 (Fig. 8). The motor 38 is controlled on the basis of the signal obtained by the encoder 40 according to the rotational angle of the screw shaft 37, that is, the moving distance of the supporting frame 32. Therefore, by controlling the motor 38 on the basis on the signal, it is possible to set exactly the moving distance of the supporting frame 32, i.e. the distance between the right and left frames 32.

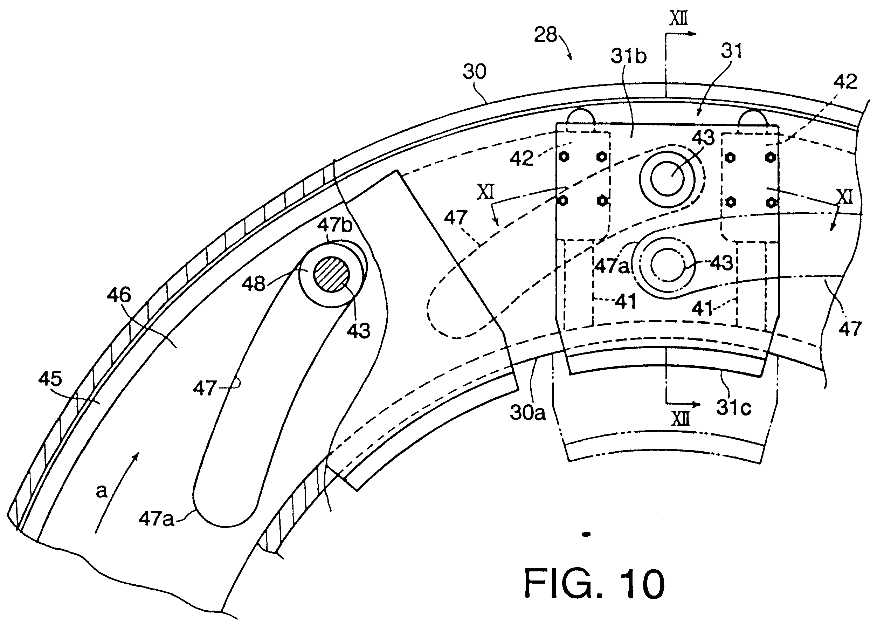

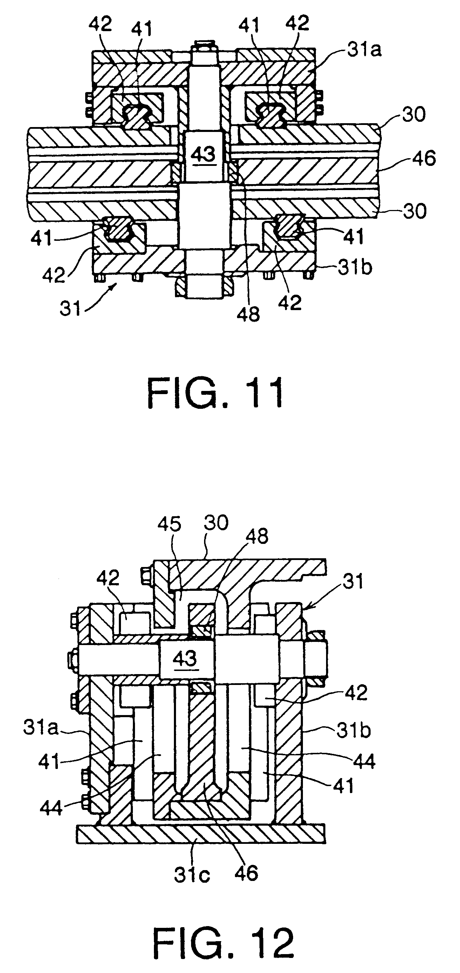

The detailed structure of the outer periphery holding body 28 will now be described with reference to Figs. 10 to 12. Fig. 10 is a partial front view of the outer periphery holding body 28, wherein the vicinity of the outer periphery holding segment 31 shown at the central and uppermost portion of Fig. 8 is enlarged; Fig. 11 is a sectional view taken along the line XI-XI of Fig. 10; and Fig. 12 is a sectional view taken along the line XII-XII of Fig. 10.

The outer periphery holding segment 31 includes right and left side plates 31a and 31b provided along the respective sides of the supporting frame 30, and a holding plate 31c for connecting the inner ends of the side plates 31a and 31b to each other across the opening 30a of the supporting frame 30. A pair of rail pieces 41 are provided on each side of the supporting frame 30 to extend in the radial direction parallel to each other. Sliding pieces 42, which are fixed on the inner side surfaces of the side plates 31a and 31b of the outer periphery holding segment 31, are slidably engaged with these rail pieces 41. Accordingly, the outer periphery holding segment 31 can be slid radially while being guided by the rail pieces 41. The right and left side plates 31a and 31b are connected to each other by a connecting shaft 43. The connecting shaft 43 passes through the supporting frame 30, specifically, through radially extending slit grooves 44 (see Fig. 12) which are provided on the supporting frame 30, such that the connecting shaft 43 can be radially moved together with the side plates 31a and 31b.

An annular space 45, which surrounds the opening 30a in a coaxial manner, is provided within the supporting frame 30, and an annular rotating ring 46 is contained in the annular space 45 so as to be rotatable therearound. In the rotating ring 46, at a position corresponding to each outer periphery holding segment 31, is provided a circular-arc guide hole 47 which extends obliquely in the circumferential direction from one end 47a on the radially inner side to the other end 47b on the radially outer side. The connecting shaft 43 passes through the guide hole 47, and is engaged with the guide hole 47 via a rotatable roller 48.

When the connecting shaft 43 is positioned at the radially outer end of the guide hole 47, the outer periphery holding segment 31 is, as shown by the solid line in Fig. 10, located at the radially outermost position, and the circumference which joins the holding plates 31c of respective outer periphery holding segments 31 is in the extended state. This is equivalent to the state shown in Fig. 7a.

When the rotating ring 46 is rotated in the direction of the arrow a in this state, the guide hole 47 is moved in the same direction. However, since the rotation of the outer periphery holding segment 31 in the direction of the arrow a is suppressed by the engagement of the rail piece 41 with the sliding pieces 42, the outer periphery holding segment 31 is moved radially inwardly along the rail piece 41, while being guided by the guide hole 47 via the connecting shaft 43. Thus, as shown by the two-dot chain line in Fig. 10, when the connecting shaft 43 reached the radially inner end 47a of the guide hole 47, the outer periphery holding segment 31 is located at the radially innermost position. Therefore, the circumference formed by the holding plates 31c of respective outer periphery holding segments 31 is in the contracted state. This is equivalent to the state shown in Figs. 7b and 7c, wherein the outer peripheral surface of the carcass body 6a is held by the holding plates 31c of the outer periphery holding segments 31.

The rotational action of the rotating ring 46 is carried out by an extending/contracting mechanism 49, shown in Fig. 8. The extending/contracting mechanism 49 comprises a stationary bracket 50 fixed on the supporting frame 30, and a cylinder apparatus 52 provided between a movable bracket 51, which is fixed on the rotating ring 46, and stationary bracket 50. The rotating ring 46 is rotated by the extension/contraction of the cylinder apparatus 52, thereby to extend/contract the outer periphery holding segment 31.

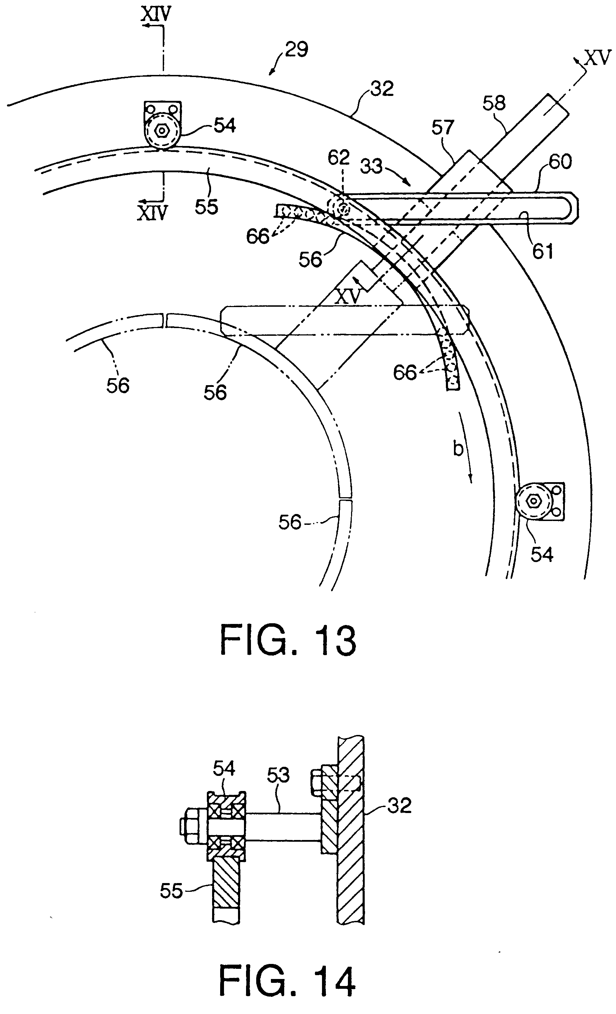

The detailed structure of the bead portion holding body 29 will be described below with reference to Figs. 13 to 16. Fig. 13 is a partial enlarged view of the bead portion holding body 29 shown in Fig. 8; Fig. 14 is a sectional view taken along the line XIV-XIV of Fig. 13; Fig. 15 is a sectional view taken along the line XV-XV of Fig. 13, and Fig. 16 is a view showing the outer surface of the bead portion holding body 29 taken in the direction of the arrow XVI of Fig. 15.

A roller shaft 53 is projectingly provided on the outer surface of the supporting frame 32, at each end of two orthogonal axes (see Fig. 14). A roller 54 is rotatably provided on the roller shaft 53. A guide ring 55 is inserted on the inner peripheral side to be surrounded by respective rollers 54, and is rotatably supported by the rollers 54 (see Fig. 8).

The bead portion holding segment 33 comprises a segment portion 56. This segment portion 56 has a curvature larger than that of the opening 32a and is located on the inner peripheral side of the opening 32a of the supporting frame 32 (Fig. 15) and extends in the circumferential direction. It is integrally formed at the radially inner end of a supporting portion 57 which extends in the radial direction. Guide rails 58 are fixed on the side surface of the supporting portion 57 on the supporting frame 32 side. The guide rails 58 extend in the radial direction, and project outward more than the supporting portion 57. Guide blocks 59, slidably engaged with the guide rails 58, are fixed on the supporting frame 32, and the bead portion holding segment 33 can be moved radially while being guided by the guide rails 58.

A guide member 60, which is inclined in the circumferential direction such that one end is positioned on the radially inner side and the other end is positioned on the radially outer side, is integrally formed on the surface of the supporting portion 57 on the guide ring 55 side. A guide groove 61 is formed on the guide member 60 so as to extend in the longitudinal direction along the guide member 60. A guide pin 62, provided on the guide ring 55, is engaged with the guide groove 61 via a rotatable roller 63 (Fig. 15).

When the guide pin 62 is engaged with the radially inner end of the guide groove 61, the bead portion holding segment 33 is located at the radially outermost position, as shown by the solid line in Fig. 13.

When the guide ring 55 is rotated in the direction of the arrow *b*, the bead portion holding segment 33 is moved (contracted in diameter) radially inwardly while being guided by the guide groove 61 via the guide pin 62, depending on the engagement relationship between the guide pin 62 and the guide groove 61. Thus, when the guide pin 62 reaches the radially outer end of the guide groove 61, the bead portion holding segment 33 is located at the innermost position, as shown by the two-dot chain line in Fig. 13. In this position, four segment portions 56 of the bead portion holding segments 33 disposed on the supporting frame 32 at equal intervals form a substantially continuous circle having a diameter equal to that of the bead portion 5 of the carcass body 6a (see Fig. 7b).

The extending/contracting action of the bead portion holding segment 33 is performed by turning of the guide ring 55 using an extending/contracting mechanism 64, shown in Fig. 8. The extending/contracting mechanism 64 comprises a cylinder apparatus 65 having one end connected to the supporting frame 32 and the other end connected to the guide ring 55. The guide ring 55 is turned by the extension/contraction of the cylinder apparatus 65.

After the segment portions 56 of the bead portion holding segments 33 are contracted in diameter to positions in which they face the bead portions 5 of the carcass body 6a, the bead portion holding body drive mechanism is operated to move the supporting frames 32 of the bead portion holding segments 29 towards one another until the segment portions 56 of the bead portion holding segments 33 contact the bead portions 5 of the carcass body 6a.

A plurality of magnets 66 is disposed on the end surface of the segment portion 56 opposed to the bead portion 5. Since the magnets 66 attract the bead wire 4 buried in the bead portion 5, the bead portion 5 is held securely by the segment portion 56. Further, the amount of movement of each supporting frame 32 is accurately set by the control of the motor 38 on the basis of the signal from the encoder 40, so that the bead portion 5 is not deformed by contact with the segment portion 56.

The holding/carrying apparatus 21 having the above-described construction achieves the function described with reference to Fig. 7.

## Claims

1. A method of forming a green tyre, comprising:
on a first forming drum (1), forming a carcass body (6) having bead portions (5) by mounting a bead wire (4) at either side of a cylindrical carcass ply (2);
deforming the carcass body (6) into a toroidal shape;
bonding a BT band (9) to the outer peripheral surface of the carcass body (6);
carrying the carcass body (6a) having the BT band (9) bonded thereto to a second forming drum (13) and mounting the carcass body (6a) on the second forming drum (13), the second forming drum (13) having side rubbers (20) positioned thereon adjacent each side of the carcass body (6a);
bringing a side rubber (20) into contact with each side of the carcass body (6a); and
bonding the side rubbers (20) to the sides of the carcass body (6a),
wherein the carcass body (6a) having the BT band (9) bonded thereto is carried to the second forming drum (13) whilst being maintained in its toroidal shape by a holding/carrying apparatus which comprises (i) a outer periphery holding body (11) adapted to hold the outer peripheral surface of said carcass body (6a), and (ii) a pair of bead portion holding bodies (12) positioned on either side of the outer periphery holding body (11) and adapted to hold the bead portions (5) of the carcass body (6a).

2. A method of forming a green tyre as claimed in claim 1, wherein the side rubbers (20) are pressed against either side of the carcass body (6) having the BT band (9) bonded thereto by means of inflatable bladders (16,17) of the second forming drum (13) so that they can be bonded to the sides of the carcass body (6).

3. In, or for use in, an apparatus for carrying out the method of claim 1 or claim 2, which apparatus comprises a said first forming drum (1) and a said second forming drum (13),
a holding/carrying apparatus (21) for transferring the carcass body (6a) with the BT band (9) bonded thereto from the first forming drum (1) to the second forming drum (13) while maintaining the carcass body (6a) in a toroidal shape, the holding/carrying apparatus (21) comprising:
an outer periphery holding body (28) for holding the outer peripheral surface of the carcass body; and
a pair of bead portion holding bodies (29) for holding the bead portions (5) of the carcass (6a), the bead portion holding bodies (29) being positioned either side of the outer periphery holding body (28) and being movable towards or away from each other symmetrically with respect to the outer periphery holding body (28).

4. A holding/carrying apparatus (21) as claimed in claim 3, wherein the outer periphery holding body (28) and the bead portion holding bodies (29) each comprise (i) a plurality of holding segments (31,33), which holding segments (31,33) are circumferentially disposed at substantially equal intervals and are movable in the radial direction, and (ii) a mechanism for radially moving the holding segments (31,33).

## Patentansprüche

1. Verfahren zum Herstellen eines Reifenrohlings, umfassend:
auf einer ersten Formtrommel (1) das Ausbilden eines Karkassenkörpers (6), der Wulstabschnitte (5) aufweist, durch das Montieren eines Wulstdrahts (4) zu beiden Seiten einer zylindrischen Karkassenlage (2);
Verformen des Karkassenkörpers (6) in ringförmige Gestalt;
Verbinden eines BT-Bands (9) mit der äußeren Umfangsfläche des Karkassenkörpers (6);
Befördern des Karkassenkörpers (6a) mit dem darauf befestigten BT-Band (9) auf eine zweite Formtrommel (13) und Montieren des Karkassenkörpers (6a) auf der zweiten Formtrommel (13), wobei die zweite Formtrommel (13) Seitengummis (20) aufweist, die auf der Formtrommel nahe an jeder Seite des Karkassenkörpers (6a) angeordnet sind;
In-Berührung-Bringen eines Seitengummis (20) mit jeder Seite des Karkassenkörpers (6a); und
Verbinden der Seitengummis (20) mit den Seiten des Karkassenkörpers (6a),
wobei der Karkassenkörper (6a), an dem das BT-Band (9) befestigt ist, zur zweiten Formtrommel (13) befördert wird, während ihn eine Halte-Beförderungsvorrichtung in seiner ringförmigen Gestalt hält, und die Halte-Beförderungsvorrichtung umfaßt: (i) einen Außenrand-Haltekörper (11), der zum Halten der äußeren Umfangsfläche des Karkassenkörpers (6a) eingerichtet ist, und (ii) ein Paar Wulstabschnitt-Haltekörper (12), die an jeder Seite des Außenrand-Haltekörpers (11) angeordnet und dazu eingerichtet sind, die Wulstabschnitte (5) des Karkassenkörpers (6a) zu halten.

2. Verfahren zum Herstellen eines Reifenrohlings nach Anspruch 1, wobei die Seitengummis (20) gegen die beiden Seiten des Karkassenkörpers (6) gedrückt werden, auf dem das BT-Band (9) befestigt ist, und zwar mit Hilfe von aufblasbaren Heizbälgen (16, 17) der zweiten Formtrommel (13), so daß die Seitengummis mit den Seiten des Karkassenkörpers (6) verbunden werden können.

3. Einrichtung zum Ausführen des Verfahrens nach Anspruch 1 oder 2, wobei die Einrichtung die erste Formtrommel (1) und die zweite Formtrommel (13) umfaßt und die Einrichtung enthält bzw. in ihr verwendet werden:
eine Halte-Beförderungsvorrichtung (21) zum Übertragen des Karkassenkörpers (6a) mit dem darauf befestigten BT-Band (9) von der ersten Formtrommel (1) zur zweiten Formtrommel (13), während der Karkassenkörper (6a) in einer ringförmigen Gestalt gehalten wird, und die Halte-Beförderungsvorrichtung (21) umfaßt:
einen Außenrand-Haltekörper (28) zum Halten der äußeren Umfangsfläche des Karkassenkörpers; und
ein Paar Wulstabschnitt-Haltekörper (29) zum Halten der Wulstabschnitte (5) der Karkasse (6a), wobei die Wulstabschnitt-Haltekörper (29) zu beiden Seiten des Außenrand-Haltekörpers (28) angeordnet sind und aufeinander zu bzw. voneinander weg bewegt werden können, und zwar symmetrisch bezüglich des Außenrand-Haltekörpers (28).

4. Halte-Beförderungsvorrichtung (21) nach Anspruch 3, wobei der Außenrand-Haltekörper (28) und die Wulstabschnitt-Haltekörper (29) jeweils umfassen: (i) eine Anzahl Haltesegmente (31, 33), die mit ungefähr gleichen Abständen kreisförmig angeordnet und in radialer Richtung beweglich sind, und (ii) einen Mechanismus zum radialen Bewegen der Haltesegmente (31, 33).

## Revendications

1. Procédé de fabrication d'un pneumatique cru, comprenant :
- la formation sur un premier tambour de formation (1) d'un corps de carcasse (6) comportant des parties formant talons (5), par montage d'une tringle de talon (4) de chaque côté d'une nappe de carcasse (2) cylindrique,
- la déformation du corps de carcasse (6) pour lui faire prendre la forme d'un tore,
- la liaison d'une bande BT (9) à la surface périphérique extérieure du corps de carcasse (6)
- le transport du corps de carcasse (6a) auquel est liée la bande BT (9) vers un deuxième tambour de formation (13) et le montage du corps de carcasse (6a) sur le deuxième tambour de formation (13), le deuxième tambour de formation (13) comportant des flancs en caoutchouc (20) placés de chaque côté du corps de carcasse (6a),
- la mise en contact d'un flanc en caoutchouc (20) avec chaque côté dudit corps de carcasse (6a), et
- la liaison des flancs en caoutchouc (20) aux côtés du corps de carcasse (6a),
dans lequel le corps de carcasse (6a) auquel est liée la bande BT (9) est transporté vers le deuxième tambour de formation (13) en conservant sa forme de tore grâce à un appareil de maintien/transport qui comprend :
(i) un corps de maintien (11) de la périphérie extérieure, capable de maintenir la surface périphérique extérieure dudit corps de carcasse (6a), et
(ii) une paire de corps de maintien (12) des parties formant talons, placés de chaque côté dudit corps de maintien (11) de la périphérie extérieure et capable de maintenir les parties formant talons (5) du corps de carcasse (6a).

2. Procédé de fabrication d'un pneumatique cru selon la revendication 1, dans lequel les flancs en caoutchouc (20) sont poussés contre les deux côtés du corps de carcasse (6) auquel est liée la bande BT (9) par des vessies gonflables (16, 17) du deuxième tambour de formation (13) de sorte qu'ils peuvent être liés aux côtés du corps de carcasse (6).

3. Appareil (21) de maintien/transport dans ou à utiliser dans une installation servant à mettre en oeuvre le procédé de la revendication 1 ou de la revendication 2, laquelle installation comprend un premier tambour de formation (1) et un deuxième tambour de formation (13), servant à transférer le corps de carcasse (6a) auquel est liée la bande BT (9) du premier tambour de formation (1) au deuxième tambour de formation (13) tout en conservant la forme de tore du corps de carcasse (6a), ledit appareil (21) de maintien/transport comprenant :
- un corps de maintien (28) de la périphérie extérieure, servant à maintenir la surface périphérique extérieure dudit corps de carcasse, et
- une paire de corps de maintien (29) des parties formant talons, servant à maintenir les parties formant talon (5) de la carcasse (6a), les corps de maintien (29) des parties formant talons étant placés de chaque côté dudit corps de maintien (28) de la périphérie extérieure et pouvant être éloignés ou rapprochés l'un de l'autre symétriquement par rapport au corps de maintien (28) de la périphérie extérieure.

4. Appareil (21) de maintien/transport selon la revendication 3, dans lequel le corps de maintien (28) de la périphérie extérieure et les corps de maintien (29) des parties formant talons comprennent chacun :
(i) une pluralité de segments de maintien (31, 33), lesquels segments de maintien (31, 33) sont disposés à intervalles sensiblement égaux sur la circonférence et sont mobiles dans la direction radiale, et
(ii) un mécanisme servant à déplacer radialement les segments de maintien (31, 33).
